# EUROPEAN PATENT APPLICATION

(11) **EP 2 869 165 A2**
(43) Date of publication of application: **06.05.2015**
(21) Application number: 14181070.5
(22) Date of filing: 14.08.2014
(51) Int. Cl.: G06F 3/033, G06F 3/0481, G06F 3/0483, G06F 3/0354

(54) **Method, apparatus and system for controlling size or position of display window**

(30) Priority: 05.11.2013 KR 20130133367
(71) Applicant: Humax Co., Ltd., Gyeonggi-do 463-875 (KR)
(72) Inventor: Song, Dong Soep, 448-755 Yongin-si (KR)
(74) Representative: Zardi, Marco

(57) **Abstract**

The present invention is related to a method, an apparatus and a system for controlling a size or a position of a display window.

The method for controlling a display window displayed on a display device, the method comprising: receiving a signal to select a certain position on a display screen from a user interface; and controlling a size or a position of the display window based on the selected position in response to the signal to select a position, wherein controlling the size or the position of the display window includes controlling the size or the position of the display window based on the selected position and a reference point of a current display window which means the display window before the size control is not performed. Accordingly, the present invention may provide a convenience of a user by easily controlling a size or a position of a display window of a browser or an application.

## Description

### CROSS-REFERENCE TO RELATED APPLICATIONS

This application claims the benefit of priority of Korean Patent Application No. 10-2013-0133367 filed on November 05, 2013, all of which are incorporated by reference in their entirety herein.

### BACKGROUND OF THE INVENTION

### Field of the Invention

The present invention is related to a method, an apparatus and a system for controlling a size or a position of a display window and more particularly, a method and an apparatus for controlling a size or a position of a window of a browser or an application.

### Discussion of the Related Art

Recently, the display products operate a display window for browsers, applications or various user settings. Such display windows may exist in plural at the same time, or only a single window may exist. Particularly, in an environment which a plurality of windows exist at the same time, changes of the size or the position of windows may be important factors in a user's display environment.

First, considering the general PC environment, it may be possible to control the size or the position of a display window by using a mouse. In this case, in order to control the size or the position of a display window such as a browser, it is possible for a user to adjust the size through the moves of clicking one of the four corners of the display window first and dragging it. In this case, the movements of a mouse should be performed by two separate moves of clicking an edge and dragging it, and there exist inconveniences since it is required to place the mouse point either at one of four sides or one of corners in clicking movements.

In addition, in an apparatus such as a set-top box, a case may exist that a mouse pointer is not a method of input. In this case, there is no concept of adjusting a window. Since a function of controlling a display window screen such as a picture-in-picture (PIP) is not provided, and then the PIP window blocks a part of the screen in which a user is currently watching, there is a problem which caused by an inconvenience of watching

### SUMMARY OF THE INVENTION

An object of the present invention to solve the problem of described above is to provide a convenience of a user by easily controlling a size or a position of a display window of a browser or an application, and a method and an apparatus for controlling a size or a position of a display window which may be applicable to a set-top box environment which uses limited input tools such as a remote controller unit (RCU).

According to an aspect of the present invention, a method for controlling a display window displayed on a display device is provided. The method comprises receiving a signal to select a certain position on a display screen from a user interface; and controlling a size or a position of the display window based on the selected position in response to the position selecting signal, wherein controlling the size or the position of the display window includes controlling the size or the position of the display window based on the selected position and a reference point of a current display window which means the display window before the size control is performed. Accordingly, the present invention may provide a convenience of a user by easily controlling a size or a position of a display window of a browser or an application.

The position selecting signal includes a first position selecting signal to control the size of the display window and a second position selecting signal to control the position of the display window, wherein the size of the display window is controlled based on a point indicated by the first position selecting signal and the reference point of the current display window in response to the first position selecting signal, and wherein the position of the display window is controlled based on a point indicated by the second position selecting signal in response to the second position selecting signal.

The first position selecting signal is generated by a movement of clicking both right and left buttons of a mouse at the same time, and wherein the second position selecting signal is generated by a movement of double clicking a right button of a mouse, or wherein the first position selecting signal is generated by a movement of double clicking a right button of a mouse, and wherein the second position selecting signal is generated by a movement of clicking both right and left buttons of a mouse at the same time.

The controlling the size or the position of the display window includes controlling the size of the display window such that the size of the display window is controlled in the form of quadrangle on which the point indicated by the first position selecting signal comes to at a vertex of a diagonal line of the reference point by setting a predefined corner of the current display window to be the reference point.

The controlling the size or the position of the display window includes controlling the size of the display window such that the reference point is to be alternately placed at one of corners after the size of the display window is initially controlled by the first position selecting signal in response to the first position selecting signal received within a reference time interval.

The controlling the size or the position of the display window includes controlling the size of the display window to be increased or to be decrease with a preset ratio while maintaining a ratio of horizontal and vertical lengths of the current display window after the size of the display window is initially controlled by the first position selecting signal in response to the first position selecting signal received within a reference time interval.

The controlling the size or the position of the display window includes controlling the position of the display window such that a ratio of horizontal and vertical lengths of the display window is maintained, and wherein the point indicated by the second position selecting signal is to be the reference point of the display window in response to the second position selecting signal.

The controlling the size or the position of the display window includes controlling the position of the display window such that the reference point is to be alternately placed at one of corners after the position of the display window is initially controlled by the second position selecting signal in response to the second position selecting signal received within a reference time interval.

The controlling the size or the position of the display window includes not performing the controlling the size of the display window if the display window gets out of the screen when controlling the position of the display window while the reference point is alternated.

The method the position of the reference point is changed according to user settings.

The reference point is one of upper left corner, lower left corner, upper right corner and lower right corner.

According to an aspect of the present invention, an apparatus for controlling a display window displayed on a display device is provided. The apparatus comprises a receiving part to receive a signal to select a certain position on a display screen from a user interface; and a display window controlling part to control a size or a position of the display window based on the selected position in response to the position selecting signal, wherein the display window controlling part controls the size or the position of the display window with respect to the selected position and a reference point of a current display window which means the display window before the size control is performed.

According to yet another aspect of the present invention, a method for controlling a size of a display window displayed on a display device is provided, the method comprises controlling a display window or a pointer to control a size of the display window to be displayed; and receiving a window size control signal to control a size of a current display window from a remote controller; and controlling a size or a position of the display window based on the selected position in response to the position selecting signal, controlling the size of the display window based on a position of the pointer in response to the window size control signal by maintaining the ratio of horizontal and vertical lengths of the current display window which means the display window before the size control is performed.

The controlling the pointer to be displayed includes controlling the pointer to be displayed on a reference point to control the size of the current display window in response to a size control activation request signal of the display window which is received from the remote controller.

The controlling the size of the display window includes: controlling the size of the display window to be decreased by a preset ratio, if a first window size control signal is received from the remote controller, and controlling the size of the display window to be increased by a preset ratio, if a second window size control signal is received from the remote controller.

The first window size control signal is generated by a click of a first button of the remote controller, and wherein the second window size control signal is generated by a click of a second button of the remote controller.

The reference point is located on one of corners or edges of the current display window.

The display window is a picture-in-picture (PIP) window.

According to still another aspect of the present invention, an apparatus for controlling a size of a display window displayed on a display device is provided. The apparatus comprises a display controlling part to control a pointer to control a size of the display window to be displayed; and a signal receiving part to receive a window size control signal to control a size of a current display window from a remote controller, wherein the display controlling part controls the size of the display window based on a position of the pointer in response to the window size control signal by maintaining the ratio of horizontal and vertical lengths of the current display window which means the display window before the size control is performed.

### BRIEF DESCRIPTION OF THE DRAWINGS

The accompanying drawings, which are included to provide a further understanding of the present invention and constitute a part of specifications of the present invention, illustrate embodiments of the present invention and together with the corresponding descriptions serve to explain the principles of the present invention.
Figure 1 is a diagram illustrating a construction of a system for controlling a display window according to an embodiment of the present invention.
Figure 2 is a schematic diagram to describe the existing method for controlling the size or the position of a display window.
Figure 3A is a schematic diagram to describe a method for controlling the size or the position of a display window according to an embodiment of the present invention.
Figure 3B is a schematic diagram to describe a reference point for controlling the size of a display window according to an embodiment of the present invention.
Figure 4 illustrates an example of controlling the size of a window repeatedly, in case a window size control signal may be received within a reference time interval according to another embodiment of the present invention.
Figure 5A illustrates an example of controlling the position of a display window according to an embodiment of the present invention.
Figure 5B illustrates an example of controlling the position of a display window repeatedly, in case a window position control signal may be received within a reference time interval according to an embodiment of the present invention.
Figure 6 is a block diagram schematically illustrating a composition of a system for controlling a display window according to an embodiment of the present invention.
Figure 7 illustrates a schematic diagram to describe operation of the mouse for performing control of the size or the position of a window of a system for controlling a display window according to an embodiment of the present invention.
Figure 8 is a detailed block diagram illustrating the control unit of the apparatus for controlling a display window according to an embodiment of the present invention.
Figure 9 is a detailed block diagram illustrating the window controlling part of the control unit of a system for controlling a display window in more detail according to an embodiment of the present invention.
Figure 10 is a diagram illustrating a system for controlling the size of a display window according to another embodiment of the present invention.
Figure 11 is a block diagram illustrating a configuration of a system for controlling the size of a display window according to another embodiment of the present invention.
Figure 12 is a schematic diagram to describe a method for controlling the size of a display window according to another embodiment of the present invention.
Figure 13 is a schematic diagram to describe the motion of the remote controller for performing the size control of a window of the system for controlling the size of a display window according to another embodiment of the present invention.
Figure 14 is a detailed block diagram illustrating the control unit of the apparatus for controlling the size of a display window in more detail according to another embodiment of the present invention.

### DETAILE DESCRIPTION OF THE INVENTION

The inventive subject matter now will be described more fully hereinafter with reference to the accompanying drawings, in which embodiments of the present invention are shown.

However, the present invention may be embodied in many different forms, modifications, equivalents and alternatives, which are included in the inventive concept and scope, and should not be construed as limited to the embodiments set forth herein.

Although the terms first, second, etc. may be used herein to describe various elements, it will be understood that these elements should not be limited by these terms. These terms are only used to distinguish one element from another. For example, a first element could be termed a second element, and similarly, a second element could be termed a first element without departing from the scope of the present invention. Herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening element present.

The terminology used herein is for the purpose of describing particular embodiments only and is not intended to be limiting of the present invention. As used herein, the singular forms are intended to include the plural forms as well, unless the context clearly indicates otherwise. It will be further understood that the terms "comprise" or "include" etc. when being used in this specification specify the presence of stated features, numbers, steps, operations, elements, components or combination of these things, but do not preclude the presence or addition of one or more other features, numbers, steps, operations, elements, components or combination of these things.

Unless otherwise defined, all terms including technical or scientific terms used herein have the same meaning as commonly understood by one of ordinary skill in the art to which the present invention belongs. It will be further understood that the terms such as those defined in commonly used dictionary should be interpreted as having a meaning that is consistent with their meaning in the context of the relevant art, and will not be interpreted in an idealized or overly formal sense unless expressly so defined herein.

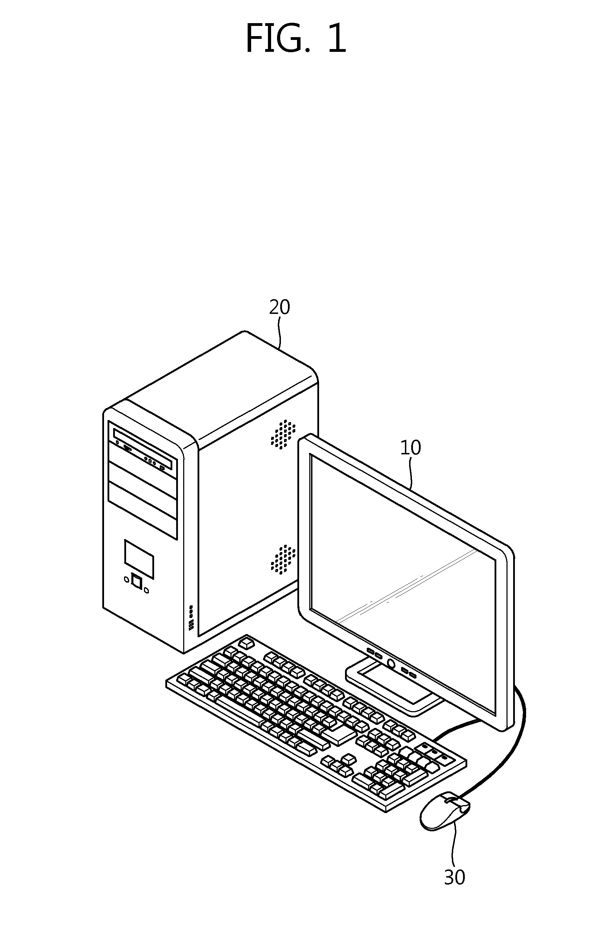

Figure 1 is a drawing illustrating a construction of a system for controlling a display window according to an embodiment of the present invention. As illustrated in Figure 1, the system for controlling the display window according to an embodiment of the present invention may include a display unit 10, a control unit 20 and a user interface 30.

Referring to Figure 1, the display unit 10 displays images on a screen by receiving a control signal from the control unit 20. An embodiment of the present invention may implemented by an environment of a PC or an environment of watching TV that includes a set-top box. That is, the display unit 10 may be a monitor which is controlled by a CPU or a TV display which is controlled by a set-top box.

The control unit 20 generates a control signal to control the display unit 10 by receiving an input signal from the user interface 30, and transmits the control signal to the display unit 10. The control unit 20 may control the size or the position of the window of the display 10 by parsing an input signal from the user interface 30. The control unit 20 may be a desktop, a PC (personal computer), a notebook computer, a set-top box, and the like.

The user interface 30 is a component for generating an input signal. The user interface 30 may transmit an input signal to the control unit 20 with being connected to the control unit 20 via a wired or wireless communication. The user interface 30 may include a mouse, a touch pad, and the like.

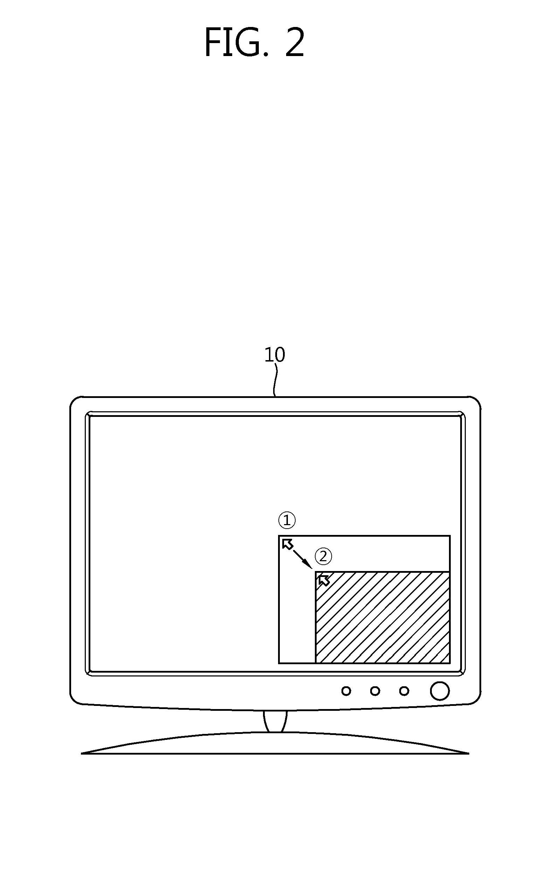

Figure 2 is a schematic diagram to describe the existing method for controlling the size or the position of a display window.

Referring to Figure 2, in the existing method, two moves should be performed to control the size or the position of the display window which is displayed on the display unit 10. First, the control of the size or the position is performed by clicking one of the four corners of the display window first and dragging it to a desired position. In this way of performing two movements, there is an inconvenient aspect since even the move of clicking one of the four corners requires delicate adjustments. In addition, it is ineffective to control the size or the position of the display window by performing both moves of clicking and dragging.

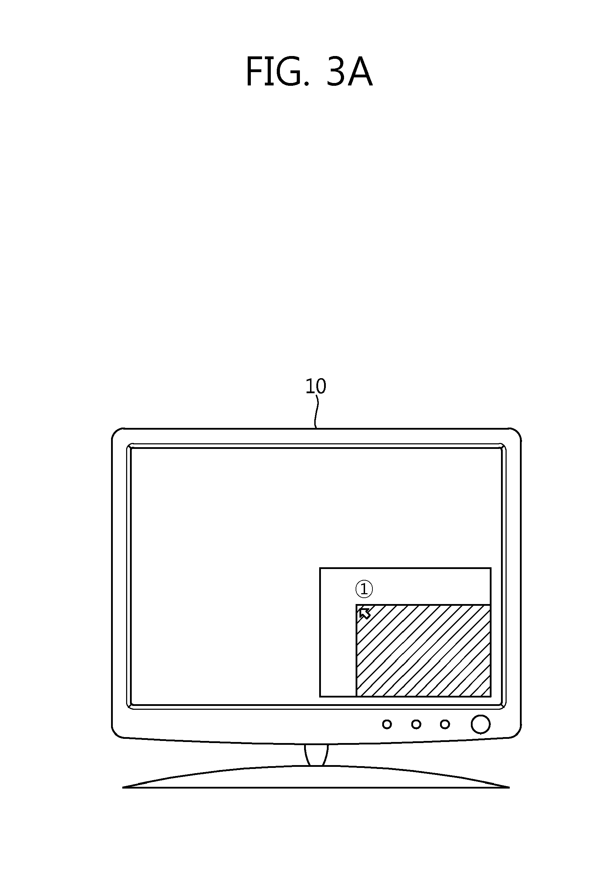

Figure 3A is a schematic diagram to describe a method for controlling the size or the position of a display window according to an embodiment of the present invention.

Referring to Figure 3A, it is available to control the size of the display window by only simplified single move compared with the existing method (refer to Figure 2). The single move mentioned above may be performed based on simple clicking of a button. The window size control signal for controlling a size of the window may be a signal to select a certain position on a display screen.

According to an embodiment of the present invention, in order to control a size of the display window of the display unit 10, the size or position of the window may be controlled by the button input based on simple clicks at a specific position on the display screen. That is, compared with the existing method (refer to Figure 2), the control of the size or the position performed by both moves of clicking one of the four corners and dragging may be performed by a single move based on a simple click at a desired position. A user may control a position of a cursor on the screen of the display unit 10 by the user interface 30, and may change the size or the position of the display window by placing the cursor at a desired position and simply clicking the button. Through this, the effectiveness of moves may be improved in comparison with the existing method used so far.

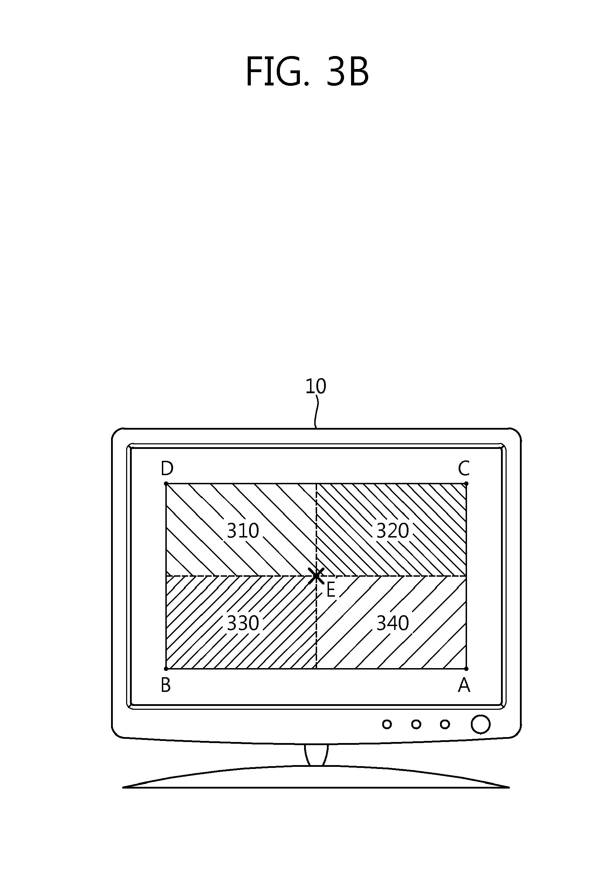

Figure 3B is a schematic diagram to describe a reference point for controlling the size of a display window according to an embodiment of the present invention.

Referring to Figure 3B, the current display is a quadrangle consisting of points of A, B, C and D. And, a size of the window controlled while a current cursor is located on the point E is assumed. When a window size control signal is received from the user interface 30, the control unit 20 controls the size of the window to have the form of quadrangle, that the position of the cursor on the time when the window size control signal is generated is to be a vertex on the diagonal of a specific reference point of the current display window. That is, there can be four cases according to a reference point. First, in case the reference point is at the upper left position D, the display window is controlled in the form of the quadrangle 310. That is, based on the upper left point D, the display window may be controlled in the form of the quadrangle in which the point E becomes a vertex on the diagonal of the reference point D. Second, in case the reference point is at the upper right position C, the display window is controlled in the form of the quadrangle 320. That is, based on the upper right point C, the display window may be controlled in the form of the quadrangle in which the point E becomes a vertex on the diagonal of the point C. Third, in case the reference point is at the lower left position B, the display window is controlled in the form of the quadrangle 330. That is, based on the lower left point B, the display window may be controlled in the form of the quadrangle in which the point E becomes a vertex on the diagonal of the point B. Last, in case the reference point is at the lower right position A, the display window is controlled in the form of the quadrangle 340. That is, based on the lower right point A, the display window may be controlled in the form of the quadrangle in which the point E is a vertex on the diagonal of the point A.

If the window size control signal is received when there are a plurality of display windows on a screen, the size of the display window at which a cursor is located on the time when the window size control signal is generated may be controlled. In some cases, it may be possible to be set up by user settings that a plurality of display windows is controlled at the same time.

In this time, if a window size control signal may be received from a user interface 30 within a reference time interval, the control unit 20 may perform the size control again by changing a reference point for controlling the size of a display window. For example, assuming that the reference time interval is 2 seconds, in case the size of a display window may be controlled in the form of the quadrangle 310 by receiving an initial window size control signal, in case the window size control signal may be received again within 2 seconds, the size of the display window may be controlled in the form of the quadrangle 320 by changing the reference point to C. Afterward, in case the window size control signal may be received within a reference time interval continually, the size of the display window may be controlled in the form of the quadrangle 320 by changing the reference point to B and to A

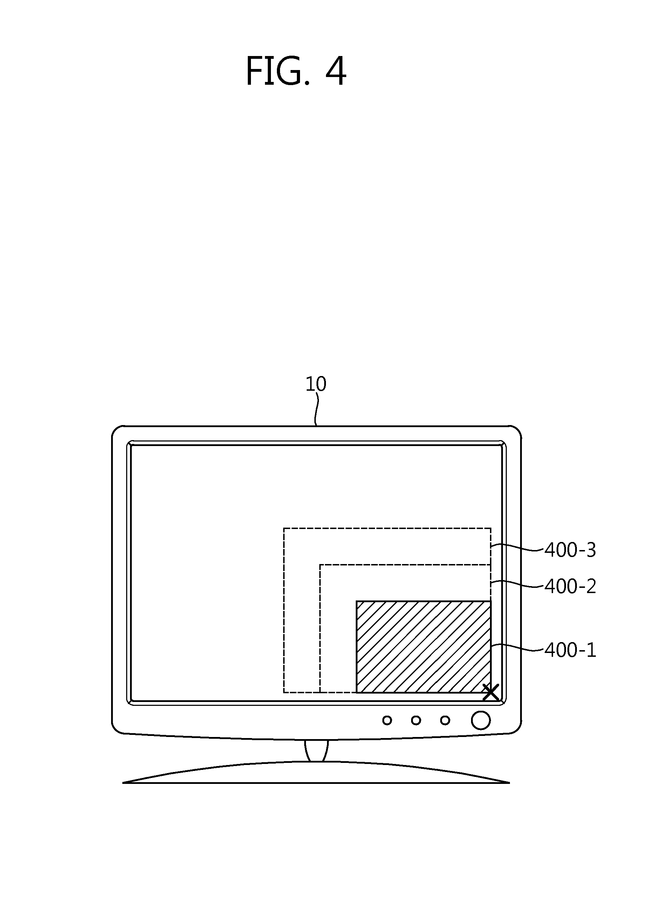

Figure 4 illustrates an example of controlling the size of a window repeatedly, in case a window size control signal may be received within a reference time interval according to another embodiment of the present invention.

Referring to Figure 4, if a window size control signal may be received within a reference time interval again after an initial control of the size of the display window, the control unit 20 may increase or decrease the size of the display window in a constant rate by maintaining the ratio of horizontal and vertical lengths of the display window which is the display window before an initial control is not made on the quadrangle 400-1 whose size is initially controlled. Accordingly, if the display window may be controlled to the quadrangle 400-1 by the initial window size control signal, it is changed to the quadrangle 400-2 in case a window size control signal may be received within the reference time interval. That may be performed repeatedly in several times. Consequently, the quadrangle 400-1 may be changed to the quadrangle 400-3, and the size of the window may be further changed.

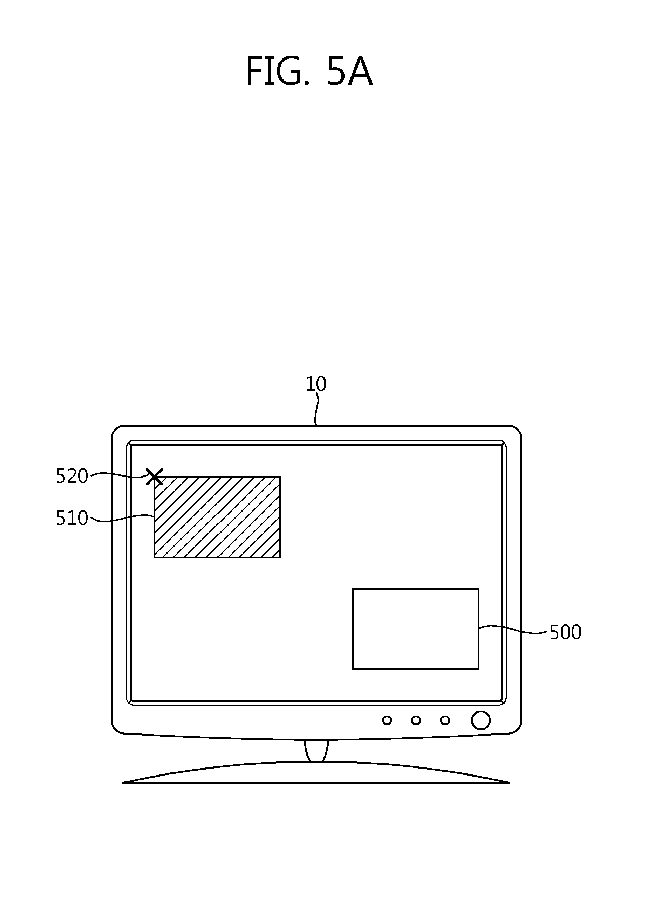

Figure 5A illustrates an example of controlling the position of a display window according to an embodiment of the present invention.

Referring to Figure 5A, if the display unit 10 may receive a window position control signal (this may be a signal to input a specific position) under the circumstance which displays the display window 500 which is that before being controlled, the control unit 20 may change the position of the window in the form of the quadrangle 510. In the existing case, there is inconvenience in that a drag should be performed after clicks. However, according to the present invention, the position of the display window may be controlled by the window position control signal which is based on a position selection signal (may be based on simple clicks).

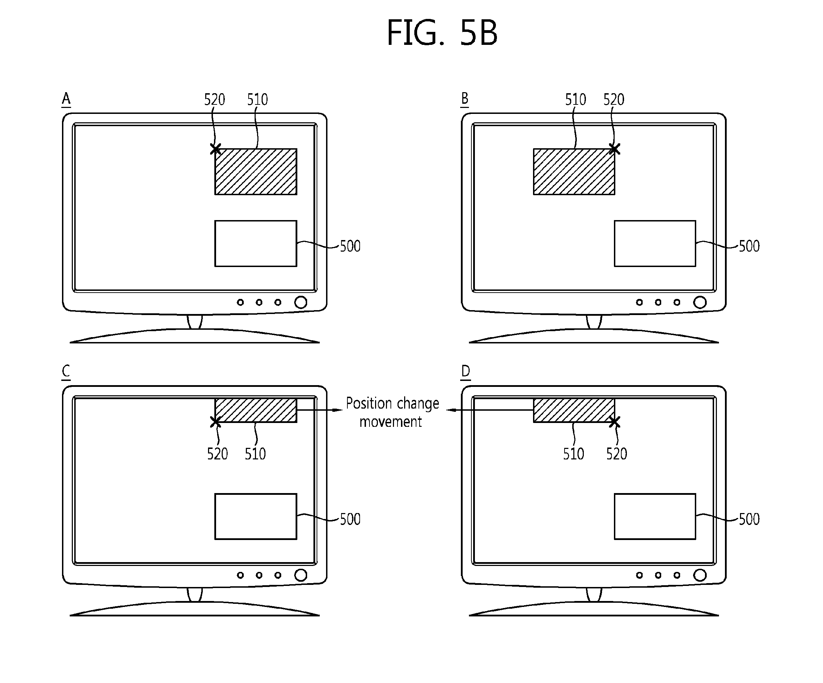

Figure 5B illustrates an example of controlling the position of a display window repeatedly, in case a window position control signal may be received within a reference time interval according to an embodiment of the present invention.

Referring to A of Figure 5B, the figure of a display window is shown whose position is initially changed from the position of the display window 500 which is that before being adjusted. The position of the display window 500 is changed to the position of the quadrangle 510 by a window position control signal (for example, a position selection signal) at the position 520. The initial control may be controlled that the position 520 is to be the upper left corner of the quadrangle 510. The reference point for the position control may be changed by the user settings. After the initial position control, if one or more window position control signal may be received within a reference time interval, the control may be performed as shown in the sequence B → C → D of Figure 5B. This is only an exemplified order, and may be changed by the user settings differently. First, referring to B of Figure 5B, it is shown that the reference point of the quadrangle 510, the display window whose position is changed based on the position 520 by receiving a window position control signal within a reference time after initial control, comes to upper right. Second, referring to C of Figure 5B, if another position control signal may be received, the reference point comes to lower left corner of the quadrangle 510. In this case, the display window gets out of the screen. In this time, the reference point may be changed to the next step automatically without any position adjustment being performed by user settings. Referring to D of Figure 5B, the reference point comes to lower right of the quadrangle 510, and the display window gets out of the screen in this time as well, the position change motion may not be performed. In this case, it may be performed that the position of the display window is automatically changed to the state shown in A of Figure 5B.

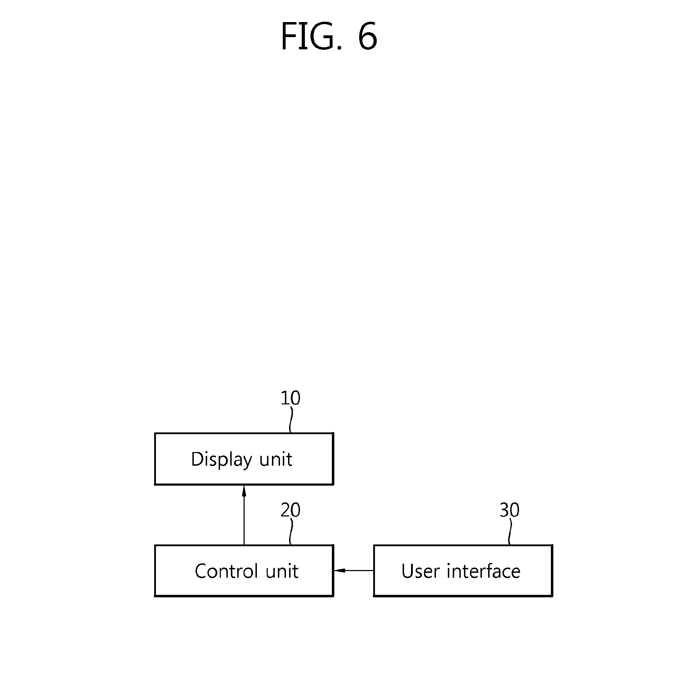

Figure 6 is a block diagram schematically illustrating a composition of a system for controlling a display window according to an embodiment of the present invention. Referring to Figure 6, a system for controlling display window may include a display unit 10, a control unit 20 and a user interface 30.

Referring to Figure 6, the display unit 10 may display the display window. The display unit 10 may receive a display window control signal (may be a position selection signal, and may include a window size control signal and a window position control signal) from the control unit 20. The display unit 10 may control the size or the position of the display window based on the control signal received above.

The control unit 20 generates a control signal by parsing the input signal from the user interface 30. And then, the size or position of the display window may be controlled by transmitting the generated control signal to the display unit 10. The control unit 20 may determine whether the input signal is a window size control signal or a window position control signal. The input method of the window size control signal or the window position control signal may be changeable by the settings of the control unit. In this time, an input method based on an appropriate simple click may be used.

The user interface 30 may generate an input signal by receiving a button input from a user. That is, if the user performs simple button click by using the user interface 30, the user interface 30 generates the input signal based on the performed click, and then transmits the generated input signal to the control unit 20. In this time, the input signal may be either one of the window size control signal or the window position control signal, and by transferring it, the size or position of the display window displayed on the display unit 10 may be controlled.

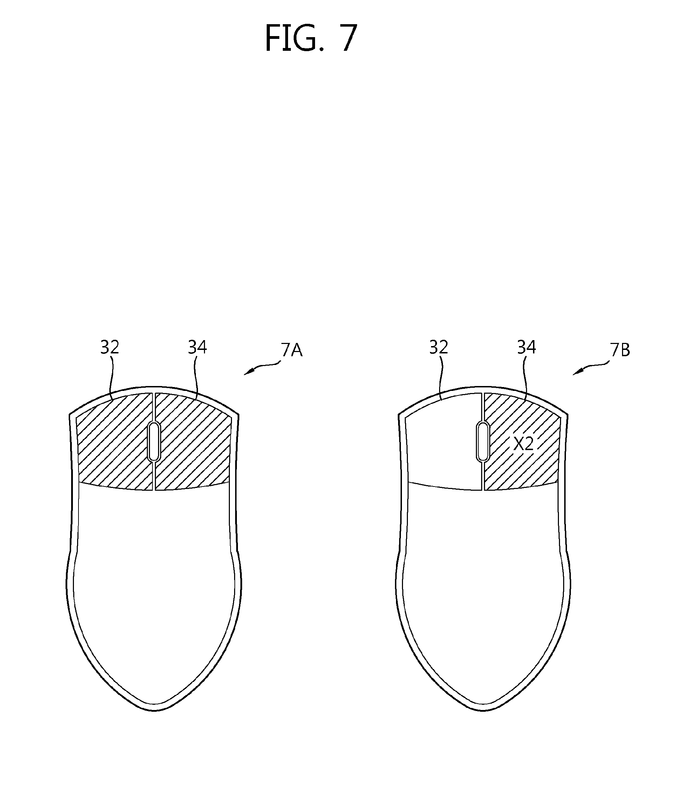

Figure 7 illustrates a schematic diagram to describe an operation of a mouse for performing control of the size or the position of a window of a system for controlling display window according to an embodiment of the present invention.

Referring to Figure 7A, the case that the user interface 30 is a mouse may be assumed. The mouse may include a left button 32 and a right button 34 at the bottom. That is, the movement of a cursor on the display unit 10 may be controlled by the mouse. First, a first method to generate a window size or position control signal is to click the left button 32 and the right button 34 of the mouse simultaneously. That is, by clicking both of the left and right buttons 32 and 34 at the same time, it may be controlled that the quadrangle based on the current position of a cursor becomes a display window.

Referring to Figure 7B, as a second method to generate a window size or position control signal, the size or the position of the display window may be controlled by double clicking the right button 34 of the mouse. Double clicking the left button 32 of the mouse usually means operation of a computer program, meanwhile double clicking the right button 34 does not cause any special operation in an usual case. According to an embodiment of the present invention, a signal for control the size or the position of the window may be generated by simple double click of the right button 34.

That is, by user settings, a window size control signal may be generated by simultaneous clicks of the both left and right buttons 32 and 34, and a window position control signal may be generated by double clicks of the right button 34. On the contrary, a window position control signal may be generated by simultaneous clicks of the both left and right buttons 32 and 34, and a window size control signal may be generated by double click of the right button 34.

The control unit 20 may set up to generate the signal for control the size or the position of the window by simultaneous clicks of the both left and right buttons 32 and 34 or double clicks of the right button 34 through user settings.

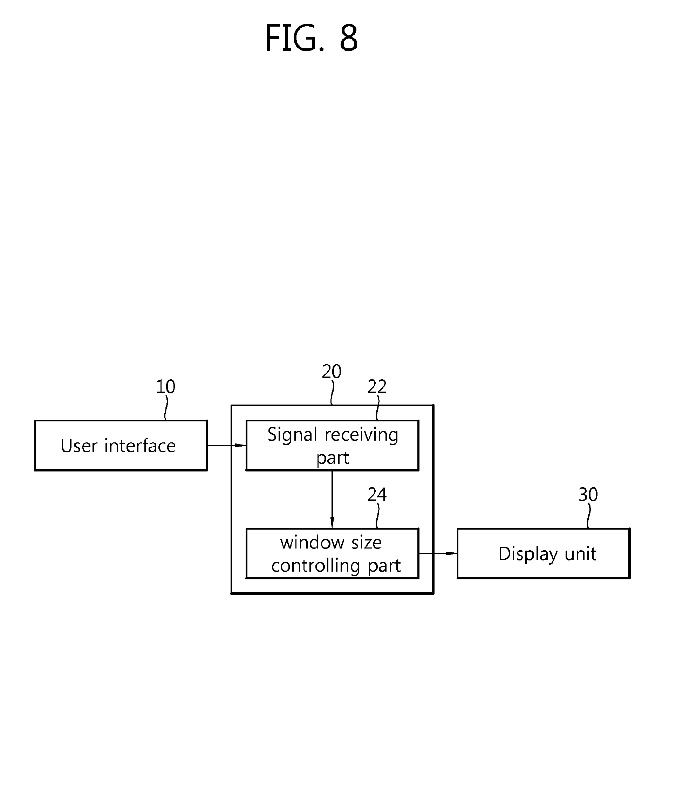

Figure 8 is a detailed block diagram illustrating the control unit 20 of an apparatus for controlling a display window according to an embodiment of the present invention. As illustrated in Figure 8, the control unit 20 according to an embodiment of the present invention may include a signal receiving part 22 and a window controlling part 24.

The signal receiving part 22 receives a window size or position control signal from the user interface 10. In this time, the window size or position control signal may be generated by a button input based on a simple click at a first position of the cursor on the display screen. In this case, the first position may be a point at which the window size or position control is performed.

The window controlling part 24 may control the size or the position of the display window based on the first position in response to a window size or position control signal. In case the window controlling part 24 may be received a window size control signal which is parsed by the signal receiving part 22, the window controlling part 24 may control the size of the display window by transmitting a control signal for controlling the size of the display window to the display unit 10. Also, in case the window controlling part 24 may be received a window position control signal which is parsed by the signal receiving part 22, the window controlling part 24 may control the position of the display window by transmitting a control signal for controlling the position of the display window to the display unit 10. In case of window size control, one of the four corners of the current display window becomes a reference point, then the size of the display window may be controlled in the form of quadrangle on which the first position comes to at the corner of the diagonal line of the reference point. Also, in case of window position control, the position may be controlled by setting the reference point of the display window controlled to be one of the four corners of the current display window. As describe above, a corner point as a reference point may be changed according to user settings.

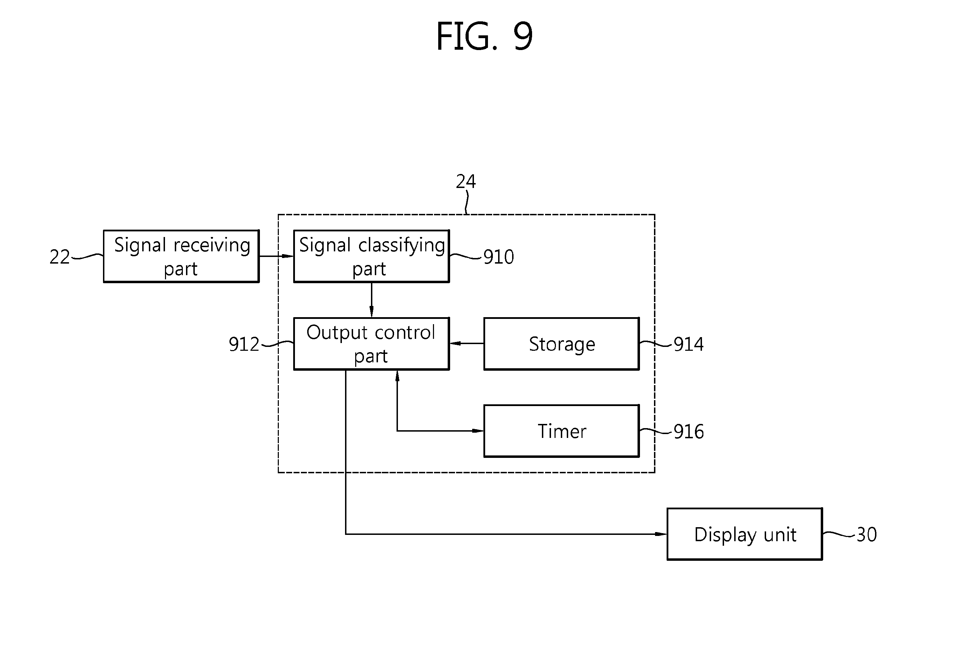

Figure 9 is a detailed block diagram illustrating the window controlling part 24 of the control unit 20 of a system for controlling a display window in more detail according to an embodiment of the present invention. As illustrated by Figure 9, the window controlling part 24 according to an embodiment of the present invention may include a signal classifying part 910, an output control part 912, a storage 914 and a timer 916.

Referring to Figure 9, the signal classifying part 910 classify the signal received from the signal receiving part 22 whether it is a window size control signal or a window position control signal. This may be classified by parsing what the input is set to through the user settings.

The output control part 912 controls that the display unit 30 is to generate output by changing of the size or the position of the display window based on the signal classified by the signal classifying part 910. The output control part 912 may receive the user setting information relevant to the reference point from the storage 914. The user setting information may include the relevant information of the initial reference point, information of changing order of the reference point, information of the reference time, and the like. Accordingly, it is controlled that the window size is controlled based on a specific corner point of the current display window in response to the window size control signal, and the window position is controlled based on a specific corner point of the display window to be controlled in response to the window position control signal. The output control part 912 may determine whether the window position control or the window size control signal is received within a reference time interval after initially receiving a window position control or a window size control signal by utilizing the timer 916. If the window position control or the window size control signal may be repeatedly received within a reference time interval, it may be controlled the size or the position of the display window according to user setting method (for example, information of the order of changing the reference point) stored in the storage 914.

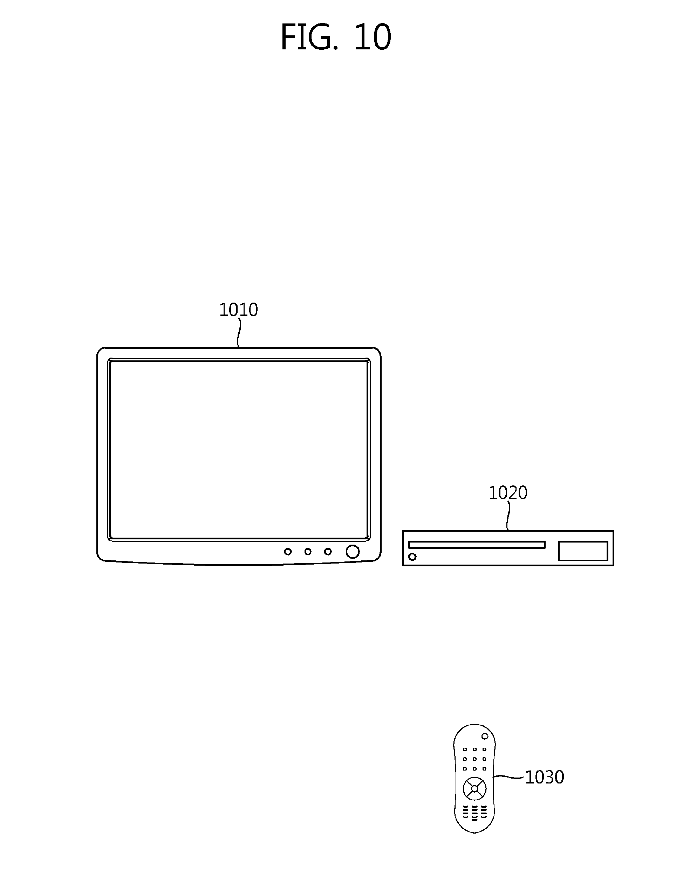

Figure 10 is a diagram illustrating a system for controlling the size of a display window according to another embodiment of the present invention. As illustrated in Figure 10, the system for controlling the size of the display window according to another embodiment of the present invention may include a display unit 1010, a control unit 1020 and a remote controller 1030.

Referring to Figure 10, the display unit 1010 may be a device for outputting a display image, for example, a monitor or a TV display.

The control unit 1020 may control the size of the display window of the display unit 1010 by receiving an input signal from the remote controller 1030. The control unit 1020 may be a set-top box, a PC or a notebook computer, but not necessarily limited thereto.

The remote controller 1030 may generate an input signal by an input move of a user, and transmit it to the control unit 1020. By this operation, the control of the size of the display window may be executed. The remote controller 1030 may be a remote control unit (RCU).

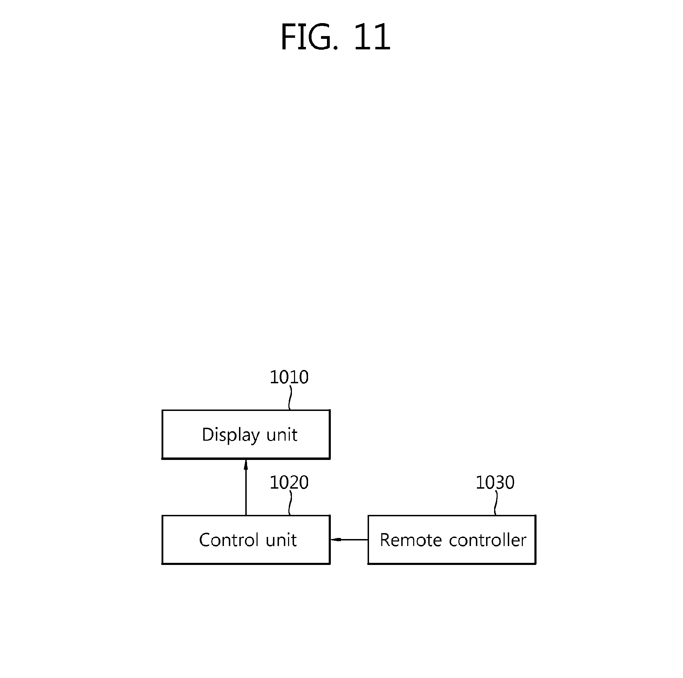

Figure 11 is a block diagram illustrating configuration of a system for controlling the size of a display window according to another embodiment of the present invention. As illustrated in Figure 11, the system for controlling the size of the display window according to another embodiment of the present invention may include a display unit 1010, a control unit 1020 and a remote controller 1030.

Referring to Figure 11, the display unit 1010 may display a display window. In particular, in an environment of watching TV through a set-top box, the TV performs a display by a control signal from the set-top box. In this time, the display window may be a sub screen of a picture-in-picture (PIP).

The control unit 1020 transmits a control signal for controlling the size of the window to the display unit 1010 by receiving a window size control signal form the remote controller 1030. The control unit 1020 may control the size of the display window (for example, the sub screen of the PIP) in response to the window size control signal. The control unit 1020 may control that a pointer is displayed on the display unit 1010 in response to a size control activation request signal of the window received from the remote controller 1030, may change the size of the display window while maintaining the ratio of horizontal and vertical lengths of the current display window based on the position of the pointer in response to a window size control signal.

The remote controller 1030 may generate an input signal (may include a window size control signal) based on a button input of a user, and transmit it to the control unit 1020. The remote controller 1030 and the control unit 1020 may connected in wireless manner. The remote controller 1030 may transmit a window size control activation request signal to the control unit 1020 by pushing a button of the window size control activation request. Later, a window size control signal which enables the size of the window to be controlled may be transmitted to the control unit 1020 with moving the pointer by left and light buttons while maintaining the ratio of horizontal and vertical lengths of the current display window. The window size control signal may be generated by a button input based on a simple click.

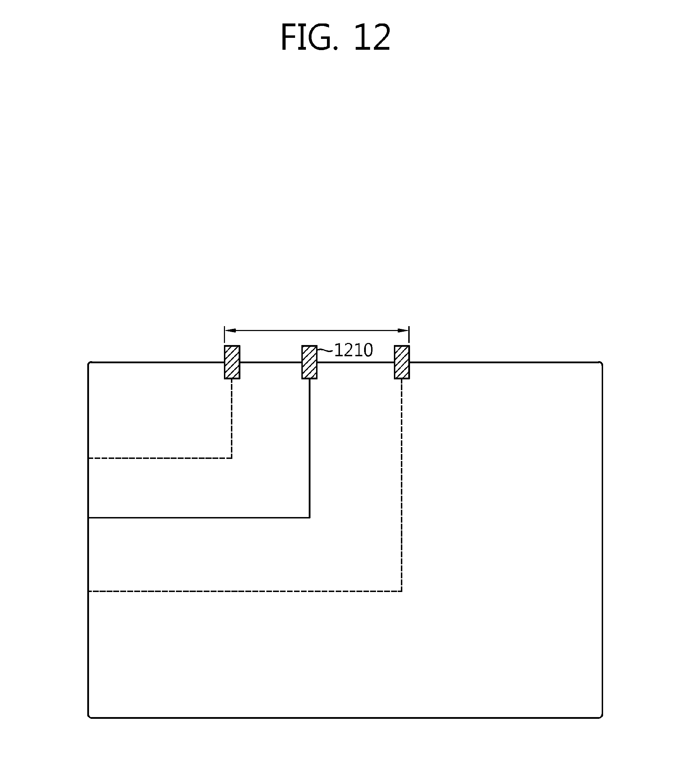

Figure 12 is a schematic diagram to describe a method for controlling the size of a display window according to another embodiment of the present invention.

Referring to Figure 12, when the control unit 1020 receives a window size control activation request signal from the remote controller 1030, the control unit 1020 initially displays a pointer 1210 at a reference point. The control unit 1020 may control that the size of the display window is changed by the pointer 1210 moving on the display unit 1010 by receiving the window size control signal from the remote controller 1030. In this time, the reference point may be one of the vertexes at upper left, upper right, lower left and lower right of the current display window according to user settings. For example, in case the reference point may be a vertex at upper right, the pointer 1210 may be displayed at the upper right of the current display window. In this time, the signal generated by pushing the left button may be a control signal which operates toward decreasing the size of the current display window, that is, which is to decrease the size of the display window in the left direction. In case of receiving the control signal to decrease the size of the window, the control unit 1020 may control the size of the window to be decreased as much as the preset ratio. For example, it may be controlled the edge length of the display window to be decreased by 5% at one click of a button by setting up the edge length of the current display window to be decreased by as much as 5%. On the contrary, the signal generated by pushing the right button may be a control signal which operates toward increasing the size of the current display window, that is, which is to increase the size of the display window in the right direction. In case of receiving this signal, it may be controlled that the size of the current display window is to increase as much as the preset ratio. The predefined ratio may be changeable according to the user settings. The reference point may also be changed to a single corner point or an edge of the current display window according to the user settings.

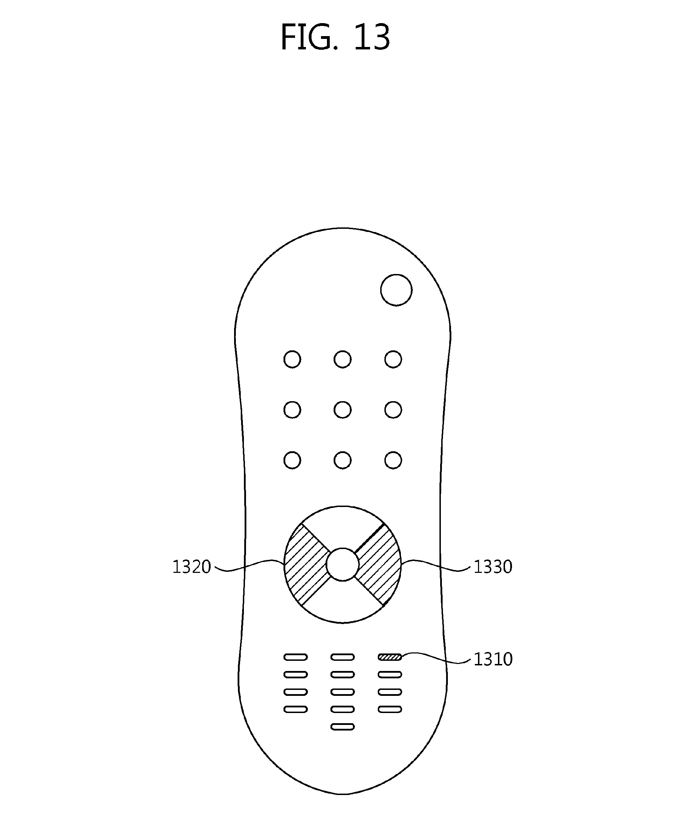

Figure 13 is a schematic diagram to describe the motion of the remote controller 1030 for performing the size control of a window of a system for controlling the size of a display window according to another embodiment of the present invention. The remote controller 1030 according to another embodiment of the present invention may include a window size control activation button 1310, a left button 1320 and a right button 1330.

Referring to Figure 11, when a user pushes the window size control activation button 1310 of the remote controller 1030, the remote controller 1030 may generate a window size control activation signal and transmit it to the control unit 1020. The control unit 1020 may control a pointer to be displayed at a reference point in response to the window size control activation signal. The remote controller 1030 may include a left button 1320 and a right button 1330 to control the size of the window. When the left button 1320 is pushed, a first window size control signal may be generated, which controls the size of the current display window in the direction which a reference point moves toward the left direction. In some cases, the first window size control signal may be a signal that the size of the display window is decreased at a predefined ratio while maintaining the ratio of the horizontal and vertical lengths of the current display window. On the contrary, when the right button 1330 is pushed, a second window size control signal may be generated, which controls the size of the current display window in the direction which a reference point moves toward the right direction. In some cases, the second window size control signal may be a signal that the size of the display window is increased as much as the preset ratio while maintaining the ratio of the horizontal and vertical length of the current display window. The control unit 1030 may control the size of the current display window by receiving the first and the second window size control signals.

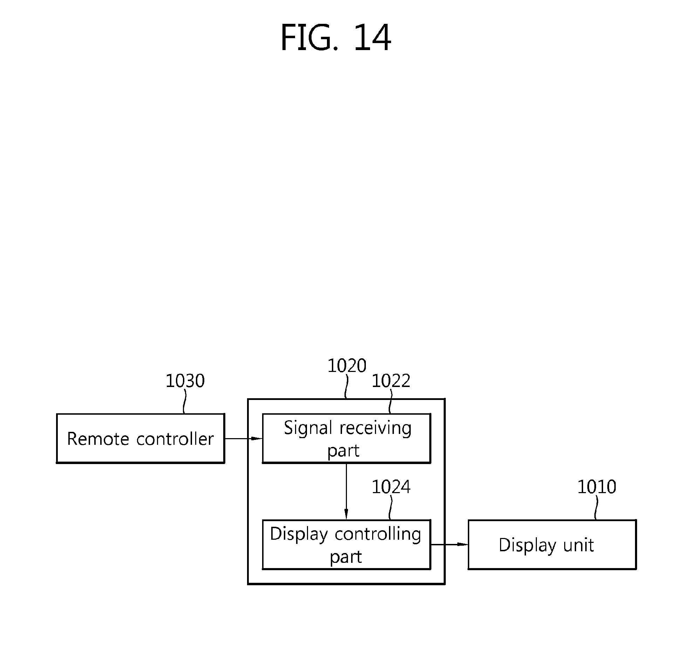

Figure 14 is a detailed block diagram illustrating the control unit 1020 of an apparatus for controlling the size of a display window in more detail according to another embodiment of the present invention. As shown in Figure 14, the control unit 1020 according to another embodiment of the present invention may include a signal receiving part 1022 and a display controlling part 1024.

Referring to Figure 14, the signal receiving part 1022 receives various signals from the remote controller 1030. The received signals may include a window size control activation request signal, a first size control signal and a second size control signal.

The display controlling part 1024 may control a display of the display window and a pointer. The display controlling part 1024 transmits a control signal to display the pointer at a reference point by receiving the window size control activation request signal received from the signal receiving part 1022. Also, by receiving the first and the second window size control signals from the signal receiving part 1022, a control signal which controls the size of the display window to be decreased or to be increased while maintaining the ratio of the horizontal and vertical length may be transmitted to the display unit 1010.

So far, the present invention has been described with reference to the drawings and the embodiments, which does not mean the scope of the present invention is not limited thereto, and it should be understood by those skilled in the art, however, that the present invention can be modified or changed in various ways without departing from the technical principles and scope.

## Claims

1. Method for controlling a display window displayed on a display device, the method comprising:
receiving a signal to select a certain position on a display screen from a user interface; and
controlling a size or a position of the display window based on the selected position in response to the signal to select a position,
wherein controlling the size or the position of the display window includes controlling the size or the position of the display window based on the selected position and a reference point of a current display window which means the display window before the size control is performed.

2. The method of claim 1, wherein the position selecting signal includes a first position selecting signal to control the size of the display window and a second position selecting signal to control the position of the display window,
wherein the size of the display window is controlled based on a point indicated by the first position selecting signal and the reference point of the current display window in response to the first position selecting signal, and
wherein the position of the display window is controlled based on a point indicated by the second position selecting signal in response to the second position selecting signal.

3. The method of claim 2, wherein the first position selecting signal is generated by a movement of clicking both right and left buttons of a mouse at the same time, and wherein the second position selecting signal is generated by a movement of double clicking a right button of a mouse, or
wherein the first position selecting signal is generated by a movement of double clicking a right button of a mouse, and wherein the second position selecting signal is generated by a movement of clicking both right and left buttons of a mouse at the same time.

4. The method of claim 2, wherein controlling the size or the position of the display window includes controlling the size of the display window such that the size of the display window is controlled in the form of quadrangle on which the point indicated by the first position selecting signal comes to at a vertex of a diagonal line of the reference point by setting a predefined corner of the current display window to be the reference point.

5. The method of claim 4, wherein controlling the size or the position of the display window includes controlling the size of the display window such that the reference point is to be alternately placed at one of corners after the size of the display window is initially controlled by the first position selecting signal in response to the first position selecting signal received within a reference time interval.

6. The method of claim 4, wherein controlling the size or the position of the display window includes controlling the size of the display window to be increased or to be decrease with a preset ratio while maintaining a ratio of horizontal and vertical lengths of the current display window after the size of the display window is initially controlled by the first position selecting signal in response to the first position selecting signal received within a reference time interval.

7. The method of claim 2, wherein controlling the size or the position of the display window includes controlling the position of the display window such that a ratio of horizontal and vertical lengths of the display window is maintained, and wherein the point indicated by the second position selecting signal is to be the reference point of the display window in response to the second position selecting signal.

8. The method of claim 7, wherein controlling the size or the position of the display window includes controlling the position of the display window such that the reference point is to be alternately placed at one of corners after the position of the display window is initially controlled by the second position selecting signal in response to the second position selecting signal received within a reference time interval.

9. The method of claim 8, wherein controlling the size or the position of the display window includes not performing the controlling the size of the display window if the display window gets out of the screen when controlling the position of the display window while the reference point is alternated.

10. Apparatus for controlling a display window displayed on a display device, the apparatus comprising:
a receiving part to receive a signal to select a certain position on a display screen from a user interface; and
a display window controlling part to control a size or a position of the display window based on the selected position in response to the signal to select a position,
wherein the display window controlling part controls the size or the position of the display window with respect to the selected position and a reference point of a current display window which means the display window before the size control is performed.

11. Method for controlling a size of a display window displayed on a display device, the method comprising:
controlling a display window or a pointer to control a size of the display window to be displayed; and
receiving a window size control signal to control a size of a current display window from a remote controller; and
controlling a size or a position of the display window based on the selected position in response to the signal to select a position,
controlling the size of the display window based on a position of the pointer in response to the window size control signal by maintaining the ratio of horizontal and vertical lengths of the current display window which means the display window before the size control is performed.

12. The method of claim 11, wherein controlling the pointer to be displayed includes controlling the pointer to be displayed on a reference point to control the size of the current display window in response to a size control activation request signal of the display window which is received from the remote controller.

13. The method of claim 11, wherein controlling the size of the display window includes:
controlling the size of the display window to be decreased by a preset ratio, if a first window size control signal is received from the remote controller, and
controlling the size of the display window to be increased by a preset ratio, if a second window size control signal is received from the remote controller.

14. The method of claim 13, wherein the first window size control signal is generated by a click of a first button of the remote controller, and
wherein the second window size control signal is generated by a click of a second button of the remote controller.

15. Apparatus for controlling a size of a display window displayed on a display device, the apparatus comprising:
a display controlling part to control a pointer to control a size of the display window to be displayed; and
a signal receiving part to receive a window size control signal to control a size of a current display window from a remote controller,
wherein the display controlling part controls the size of the display window based on a position of the pointer in response to the window size control signal by maintaining the ratio of horizontal and vertical lengths of the current display window which means the display window before the size control is performed.
